# EUROPEAN PATENT APPLICATION

(11) **EP 2 733 120 A1**
(43) Date of publication of application: **21.05.2014**
(21) Application number: 12796824.6
(22) Date of filing: 07.06.2012
(51) Int. Cl.: C02F 1/42, B01D 63/02, C02F 1/28, C02F 1/44

(54) **WATER-PURIFYING CARTRIDGE AND WATER PURIFIER**

(30) Priority: 10.06.2011 JP 2011130418
(71) Applicant: Mitsubishi Rayon Co., Ltd., Tokyo (JP)
(72) Inventor: TAKEDA, Hatsumi, Toyohashi-shi Aichi 440-8601 (JP); HATAKEYAMA, Atsushi, Tokyo 103-0016 (JP)
(74) Representative: HOFFMANN EITLE
(86) International application number: PCT/JP2012/064657
(87) International publication number: WO 2012/169577

(57) **Abstract**

The purpose of the invention is to provide a water-purifying cartridge capable of effectively removing heavy metals contained in raw water, even when water quality is different. One aspect of the present invention is a water-purifying cartridge provided with a container, a filtering material containing an adsorbent for changing the pH of the water, and a hollow fiber membrane. The container has two openings, and is of such a construction that either of the openings can be used as an inlet for introducing raw water, and the other of the openings can be used as an outlet for purified water. The filtering material and the hollow fiber membrane are arranged within the container in this order, from one of the opening toward the other.

## Description

### TECHNICAL FIELD

The present invention relates to a water-purifying cartridge. The invention also relates to a water purifier provided with the water-purifying cartridge.

### BACKGROUND ART

For example, a pot-type water purifier is known as a water purifier provided with a water-purifying cartridge. This pot-type water purifier has a structure in which a water-purifying cartridge is interposed between a raw water storage section located at the upstream side and a purified water storage section located at the downstream side. The raw water stored in the raw water storage section flows through the water-purifying cartridge into the purified water storage section under gravity-fed and is purified in the water-purifying cartridge. A water-purifying cartridge installed in a pot-type water purifier is described, for example, in Patent Document 1. In such water-purifying cartridge, an ion exchange resin is used as a filtering material.

In this configuration, in the water-purifying cartridge, an adsorbent such as chelate resin and ion exchange resin is used for removing heavy metals such as lead that are contained in tap water. In addition to the adsorbent, a hollow fiber membrane is also used, and the hollow fiber membrane is generally arranged at the downstream side of the adsorbent.

### CITATION LIST

### PATENT DOCUMENT

Patent Document 1: Japanese Translation of PCT International Application No. 2003-514647

### DISCLOSURE OF THE INVENTION

### PROBLEM TO BE SOLVED BY THE INVENTION

However, a state of the heavy metals contained in tap water varies in each country or region, and thus with a conventional water-purifying cartridge in which an adsorbent for changing pH of water such as an ion exchange resin is used, there is a case in which the heavy metals are not sufficiently removed. More specifically speaking, for example, when pH of tap water is near 8, lead contained in the tap water is more likely present in particle state instead of ion state. In such case, lead in particle state that is introduced to inside of a container via a raw water inlet is difficult to get adsorbed by an adsorbent, and thus it flows to the downstream side of an adsorbent layer. Further, at the downstream side of an adsorbent layer, pH of water is changed by an ion exchange resin or the like and it shifts to the acid side. Once the pH of water shifts to the acid side, lead is more likely present in ion state than particle state. For such reasons, lead is in ion state in the downstream side of an adsorbent layer, and it may be discharged after passing through a hollow fiber membrane.

Under the circumstances, the purpose of the invention is to provide a water-purifying cartridge capable of effectively removing heavy metals contained in raw water, even when water quality is different.

### MEANS FOR SOLVING PROBLEM

Thus, the invention relates to a water-purifying cartridge provided with a container having a first opening and a second opening, in which any one of the first opening and the second opening can be used as an inlet for introducing raw water and the other can be used as an outlet for purified water, a filtering material containing an adsorbent capable of adsorbing heavy materials, and a hollow fiber membrane, in which the filtering material and the hollow fiber membrane are arranged within the container in this order, from one of the first opening and the second opening toward the other.

### EFFECT OF THE INVENTION

The water-purifying cartridge according to the invention can be installed on a source of water in a direction which is selected depending on conditions of quality of water, and thus regardless of a difference in quality of water in each country or region, it can efficiently remove heavy metals included in raw water.

### BRIEF DESCRIPTION OF DRAWINGS

Fig. 1 is a schematic cross-sectional view illustrating a configuration example of a water-purifying cartridge according to an embodiment of the invention;
Fig. 2 is a schematic cross-sectional view illustrating the state in which the water-purifying cartridge 1001 is arranged in an accommodating section;
Fig. 3 is a schematic cross-sectional view illustrating the state in which the water-purifying cartridge 1001 is arranged in an accommodating section in the direction opposite to the direction of Fig. 2;
Fig. 4 is a schematic cross-sectional view illustrating a configuration example of a water-purifying cartridge according to an embodiment of the invention;
Fig. 5 is a schematic cross-sectional view illustrating the state in which the water-purifying cartridge 1002 is arranged in an accommodating section;
Fig. 6 is a schematic cross-sectional view illustrating a configuration example of a water-purifying cartridge according to an embodiment of the invention;
Fig. 7 is a schematic cross-sectional view illustrating the state in which the water-purifying cartridge 1004 is arranged in an accommodating section;
Fig. 8 is a schematic cross-sectional view illustrating a configuration example of a water-purifying cartridge according to an embodiment of the invention;
Fig. 9 is a schematic external view illustrating a configuration example of a water-purifying cartridge according to an embodiment of the invention;
Fig. 10 is a schematic cross-sectional view illustrating the state in which the water-purifying cartridge 1006 is arranged in an accommodating section;
Fig. 11 is a schematic cross-sectional view illustrating a configuration example of a water-purifying cartridge according to an embodiment of the invention;
Fig. 12 is a schematic cross-sectional view illustrating a configuration example of a pressure filtration-type water-purifying cartridge according to an embodiment of the invention; and
Fig. 13 is a graph illustrating the results of the example of the invention.

### BEST MODE(S) FOR CARRYING OUT THE INVENTION

The water-purifying cartridge of the invention is provided with a container having a structure including a first opening and a second opening, in which any one of the first opening and the second opening can be used as an inlet for introducing raw water and the other can be used as an outlet for purified water. Further, the water-purifying cartridge of the invention has a filtering material containing an adsorbent capable of adsorbing heavy materials and a hollow fiber membrane within the container. The filtering material and the hollow fiber membrane are arranged within the container in this order, from one of the first opening and the second opening toward the other.

By having the configuration of the invention, the direction for installation on a source of water can be selected depending conditions of quality of water, and therefore heavy metals contained in raw water can be efficiently removed regardless of a difference in quality of water in each country or region.

Herein below, embodiments of the water-purifying cartridge of the invention are explained in detail in view of the drawings. However, the invention is not limited to the following embodiments.

### (Embodiment 1)

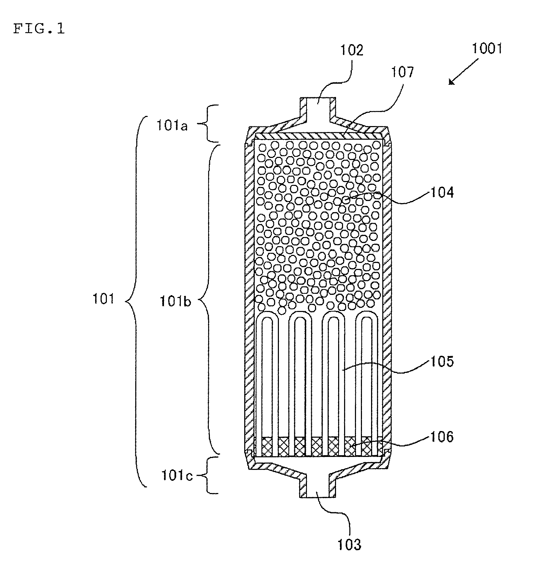

Fig. 1 is a schematic cross-sectional view for illustrating a configuration example of a gravity-fed filtration-type water-purifying cartridge according to an embodiment of the invention.

In Fig. 1, the water-purifying cartridge 1001 is provided with the container 101 which accommodates the filtering material 104 and the hollow fiber membrane 105 within it. The filtering material 104 contains an adsorbent capable of adsorbing heavy metals. The container 101 is mainly constituted with the cylindrical case body 101b which accommodates the filtering material 104 and the hollow fiber membrane 105, the first cover 101a arranged at one end of the case 101b, and the second cover 101c arranged at the other end of the case body 101b. In the center of the first cover 101a, the first opening 102 is provided. Also in the center of the second cover 101c, the second opening 103 is provided. The filtering material 104 and the hollow fiber membrane 105 are arranged in this order in the container 101, from the first opening 102 toward the second opening.

Within the container, the hollow fiber membrane 105 is fixed at the end side of the second cover 103 of the case body 102b with an aide of the potting resin 106. The end part of the hollow fiber membrane 105 remains open on a surface side that is opposite to a surface side at which the hollow fiber membrane of the potting resin 106 is arranged. Water can flow in or flow out through the opening of the hollow fiber membrane. The filtering material 104 is accommodated within the container by the partition wall 107 through which water can flow.

For connecting the first cover 101a and the case body 101b, or the second cover 101c and the case body 101b, adhesion or melt adhesion may be used, for example.

Any one of the first opening 102 and the second opening 103 can function as any one of a raw water inlet for introducing raw water to the container or a purified water outlet for transporting purified water to an outside of the container. When the first opening 102 functions as a raw material inlet, the second opening 103 functions as a purified water outlet, and when the second opening 103 functions as a raw water inlet, the first opening 102 functions as a purified water outlet.

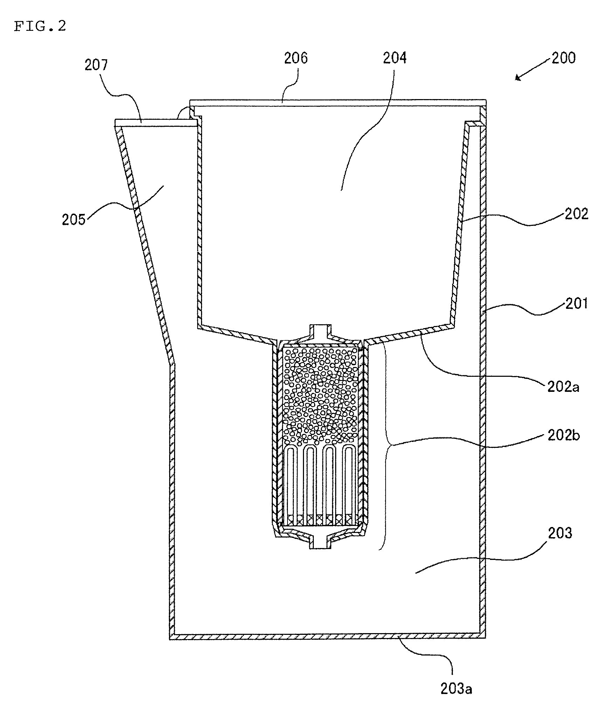

In Fig. 2, an exemplary configuration of a water purifier which is provided with the water-purifying cartridge 1001 illustrated in Fig. 1 is illustrated. In Fig. 2, the water-purifying cartridge 1001 1 is arranged in the accommodating section 202b with the first opening 102 facing upward. In the present specification, the vertical direction of the water-purifying cartridge indicates the direction of the state in which the arrangement is made in an accommodating section as illustrated in Fig. 2.

The water purifier 200 illustrated in Fig. 2 is a so-called pot-type water purifier. The water purifier 200 mainly consists of the raw water storage section 204 for storing supplied raw water such as tap water, the water-purifying cartridge 1001 installed in a bottom part of the raw water storage section 204, and the purified water storage section 203 which is located in a lower region of the raw water storage section 204 and the water-purifying cartridge 1001. The raw water stored in the raw water storage section 204 is purified while it passes through the water-purifying cartridge 1001 under gravity-fed, and it flows down to the purified water storage section 203.

The water purifier 200 is provided with the cylindrical outer container 201 having a bottom with top-end opening and the cylindrical inner container 202 having a bottom with top-end opening, which is inserted through the top-end opening of the outer container 201 and arranged within the outer container 201. The inner container 202 is arranged at a depth half or less the depth of the outer container 201, tightly fitted into the portion of the upper half part of the outer container 201 except a predetermined clearance 205 to thereby form the raw water storage section 204 in the inner container 202. In addition, the purified water storage section 203 is provided between the bottom wall 202a of the inner container 202 and the bottom wall 201a of the outer container 201. The clearance 205 is formed so as to extend upward from the purified water storage section 203 and functions as a pouring path when pouring purified water.

The top cover 206 is fitted in the top-end opening of the inner container 202. For example, a freely openable and closable flap may be provided at the center of the top cover 206 so as to open a water inlet or close the water inlet from above. Furthermore, the opening formed at the top end of the clearance 205 functions as a pouring inlet and the pouring inlet is provided with the pouring cover 207.

The bottom wall 202a of the inner container is provided with the accommodating section 202b that accommodates a water-purifying cartridge and the bottom wall 202a of the inner container is formed into a gentle downward slope toward the accommodating section 202b. The accommodating section 202b of the water-purifying cartridge is recessed from the bottom wall 202a of the inner container toward the purified water storage section. The water-purifying cartridge 1001 is fitted into the accommodating section 202b from above. The accommodating section 202b has an opening at the center bottom thereof and has a structure in which the raw water storage section 204 communicates with the purified water storage section 203 installed below via the accommodating section 202b and this opening at the bottom, that is, the water-purifying cartridge 1001 fitted in the accommodating section 202b.

For installation of the water-purifying cartridge 1001 to the accommodating section 202b, an insertion with twisting or a rachet method can be used in addition to a method of insertion using a rubber packing, but it is not particularly limited.

In Fig. 2, the water-purifying cartridge 1001 1 is arranged on the accommodating section 202b with the first opening 102 facing upward. In a state illustrated in Fig. 2, the first opening 102 functions as a raw water inlet and the second opening 103 functions as a purified water outlet. Raw water in the raw water storage section 204 flows into the container via the first opening 102 under gravity-fed. The water filtered through the filtering material 104 is filtered again by the hollow fiber membrane 105 and flows out via the end opening of the hollow fiber membrane. Then, the obtained purified water is discharged to the purified water storage section 203 via the second opening 103, which functions as a purified water outlet.

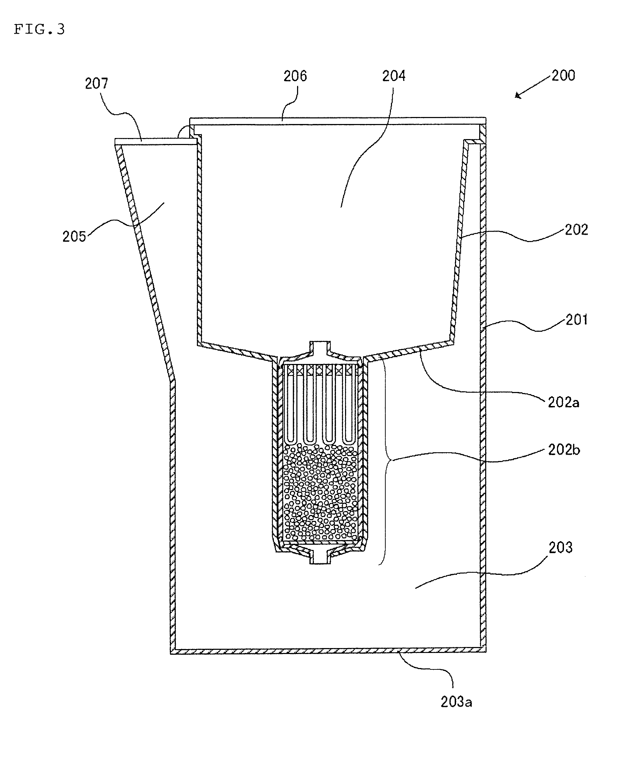

Herein, when the pH of tap water is lower than 8, there is a tendency that lead contained in the tap water is more likely present in ion state than particle state. Since the lead in ion state can easily adsorb onto the filtering material, as illustrated in Fig. 2, by arranging the first opening 102 in upward direction so that the raw water can flow through the filtering material before the hollow fiber membrane, lead can be more efficiently removed. Meanwhile, when pH of tap water is higher than 8, there is a tendency that lead contained in tap water is more likely present in particle state. In such case, as illustrated in Fig. 3, by arranging the second opening 103 in an upward direction, lead is removed by the hollow fiber membrane before the filtering material, and thus lead can be removed more efficiently. In a state illustrated in Fig. 3, the second opening 103 functions as a raw water inlet and the first opening 102 functions as a purified water outlet.

Thus, according to the water-purifying cartridge of the invention, the arrangement direction can be selected depending on state of raw water and the heavy metals contained in water can be efficiently removed.

As described herein, the filtering material includes an adsorbent capable of adsorbing heavy metals (hereinafter, abbreviated as a heavy metal adsorbent).

The heavy metal adsorbent is not particularly limited, if it can adsorb heavy metals. However, an ion exchange resin or a chelate resin may be used, for example.

The ion exchange resin is one type of a synthetic resin and it has a structure which is dissociated as an ion exchange group in part of its molecular structure. Depending on properties of the ion exchange group, the ion exchange resin is classified into a cation exchange resin and an anion exchange resin. Further, depending on a type of the ion exchange group, the cation exchange resin is classified into H-type, Na-type, K-type, or the like. In the invention, from the viewpoint of heavy metal adsorption performance, it is preferable to use a H-type cation exchange resin among the ion exchange resins. Examples of the ion exchange group included in the H-type cation exchange resin include a sulfonic acid group and a (meth)acrylic acid group. The cation exchange resin having a (meth)acrylic acid group is generally referred to as a weak acid cation exchange resin. Further, the ion exchange resin is a synthetic resin having in main resin body a functional group (exchange group) responsible for ion exchange, and it can exchange the ion contained in the resin with the ion in a solution. Depending on a type of the functional group, the ion exchange resin is classified into four types, that is, a strong acid cation exchange resin, a weak acid cation exchange resin, a strong base anion exchange resin, and a weak base anion exchange resin.

The chelate resin is a resin introduced with a functional group for making a chelate (complex) mainly with a metal ion. By forming a chelate, a specific metal ion can be captured. The chelate resin has a chelate-forming group which generally includes two or more electron-donating atoms such as N, S, O, or P, and depending on its combination structure, it is classified into an iminodiacetic acid type, a polyamine type, a glucamine type, or the like. In the invention, from the viewpoint of efficient removal of heavy metals, a chelate resin of iminodiacetic acid type is preferable.

The ion exchange resin or chelate resin is classified into a gel type, a porous type, a high porous type, a MR (macro-reticular) type or the like depending on the properties. The gel-type resin only has micropores that are formed of a three dimensional structure of styrene and divinyl benzene (DVB). The high porous-type resin and MR-type resin have macropores as well as micropores. The high porous-type resin and MR-type resin generally have high cross-linking degree. The porous type is present between the gel type and the high porous type. The H-type cation exchange resin and chelate resin that are used in the invention are preferably a high porous type or a MR type, and more preferably a MR type.

Further, the filtering material may contain other adsorbents other than the heavy metal adsorbent. Examples of such an adsorbent include natural product-based adsorbent (natural zeolite, silver zeolite, acid white clay or the like), or inorganic adsorbent such as synthetic product-based adsorbent (synthetic zeolite, bacterial adsorption polymer, phosphate ore, molecular sheave, silica gel, silica alumina gel, porous glass or the like). Furthermore, examples of the adsorbent include powdered adsorbent, granular adsorbent resulting from granulating the powdered adsorbent, and fibrous adsorbent. Furthermore, activated carbon is preferably used as the adsorbent, and examples of activated carbon include powdered activated carbon, granular activated carbon, fibrous activated carbon, block-shaped activated carbon, extrusion molding activated carbon, molded activated carbon, synthetic product-based granular activated carbon, and synthetic product-based fibrous activated carbon. Among these materials, activated carbon having excellent adsorption performance for organic compound such as residual chlorine in raw water, mold odor or trihalomethane is preferably used.

Further, as other adsorbent, a de-chlorinating agent having an excellent effect of removing residual chlorine may be also preferably used. Preferred examples of the de-chlorinating agent include calcium sulfite and sodium ascorbate which can maintain the chlorine-removing effect for a long period of time.

The heavy metal adsorbent may be contained at 10% by volume or more, for example, preferably 20% by volume or more, more preferably 30% by volume or more, and even more preferably 40% by volume or more relative to the entire filtering material.

Meanwhile, the adsorbent may be used either singly or in combination of two or more types.

The hollow fiber membrane is not particularly limited in the invention, but examples thereof include various materials based on cellulose, polyolefin (polyethylene, polypropylene), polyvinyl alcohol, ethylene vinyl alcohol copolymer, polyether, polymethyl methacrylate (PMMA), polysulfone, polyacrylonitrile, polytetrafluoroethylene (Teflon (registered trademark)), polycarbonate, polyester, polyamide, and aromatic polyamide. Among these materials, polyolefin-based hollow fiber membrane such as polyethylene and polypropylene is preferable in consideration of operability and process property of hollow fiber membrane, or further, incineratability when disposed of.

Furthermore, although not particularly limited, the hollow fiber membrane preferably has an outside diameter of 20 to 2000 µm, pore size of 0.01 to 1 µm, porosity of 20 to 90%, and film thickness of 5 to 300 µm. Furthermore, the hollow fiber membrane is preferably a so-called hydrophilic hollow fiber membrane having a hydrophilic group on the surface.

The shape of the lateral surface of the container can be, although not particularly limited, an approximately cylindrical shape, for example.

The shape of the opening surface of the first opening and the second opening can be, although not particularly limited, a cylindrical shape, an elliptical shape, or a polygonal shape, for example, and it can be also an amorphous shape. Further, although not particularly limited, it is preferable that the first opening and the second opening have an identical shape. When each member constituting the first opening and the second opening has an identical shape, it is easy to arrange them in any direction in an accommodating section.

### (Embodiment 2)

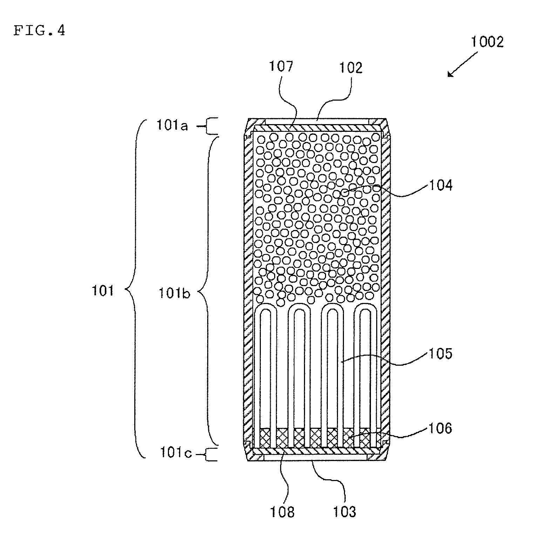

Fig. 4 is a schematic cross-sectional view illustrating a preferred configuration example of the present embodiment.

In Fig. 4, a shape of the container is approximately cylindrical including the first cover 101a and the second cover 101c. On top surface of the approximately cylindrical container, the first opening 102 is installed and, immediately below the first opening 102, the partition wall 107 with water permeability for accommodating the filtering material 104 within the container is installed. The hollow fiber membrane 105 is accommodated within the container with an aid of the potting resin 106. On the bottom surface of the approximately cylindrical container, the second opening 102 is installed. Between the second opening 102 and the potting resin 106, the filter 108 is installed. By installing the filter 108, relatively large impurities can be supplemented when it is used while having the hollow fiber membrane side in upward direction.

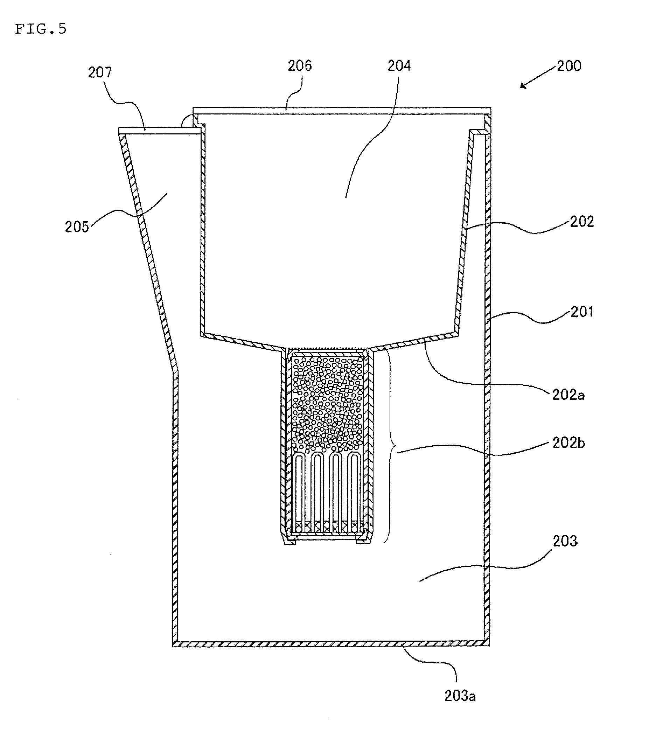

Fig. 5 is a schematic cross-sectional view illustrating the state in which the water-purifying cartridge 1002 illustrated in Fig. 4 is arranged in the accommodating section 202b.

In Fig. 5, by arranging the water-purifying cartridge 1002 on the accommodating section 202b, the opening surface of the first opening 102 is present at the same height as the top end of the accommodating section or below it. Specifically, the opening surface of the first opening 102 is at a height equal to or below the height of the top end of the accommodating section.

The water-purifying cartridge according to the invention preferably has a configuration that, when arranged in any direction in the accommodating section of the water purifier, the opening surface of the first opening 102 and the second opening 103 is present at a height equal to or below the height of the top end of the accommodating section. By having such configuration, when the water-purifying cartridge is arranged in any direction in the accommodating section, raw water can be more effectively introduced to the container. By having an approximately cylindrical shape as a shape of the container of the water-purifying cartridge, the area of the first opening and the area of the second opening can be enlarged so that the volume of the filtering material or the hollow fiber membrane can be effectively maintained and a water-purifying cartridge having excellent efficiency for introducing raw water and excellent filtration efficiency can be provided.

### (Embodiment 3)

The water-purifying cartridge according to the present embodiment has a configuration in which the fitting section for the accommodating section is installed near the center in the vertical direction of the container. By fitting a part of the fitting section and the accommodating section, the water-purifying cartridge is accommodated in a liquid tight manner. As the fitting section for the accommodating section is installed near the center of the container, a position of the opening for introducing raw water to the container can be consistently maintained even when the accommodating section is inserted in any direction.

Further, the fitting section is preferably installed near the center of the container in a circumferential direction. Further, the fitting section is preferably installed near the center of the lateral surface of the container in a circumferential direction

As for a fitting mode, an insertion mode using an elastic body, a twist mode, a rachet method, or the like may be used, and it is not particularly limited. From the viewpoint of easy removal, the insertion mode using an elastic body is preferable.

Meanwhile, the arrangement within the water purifier of the water-purifying cartridge is not limited to a case in which insertion is made from above the top side of the accommodating section, and it is also possible to have a configuration in which insertion and removal are made from the lower side.

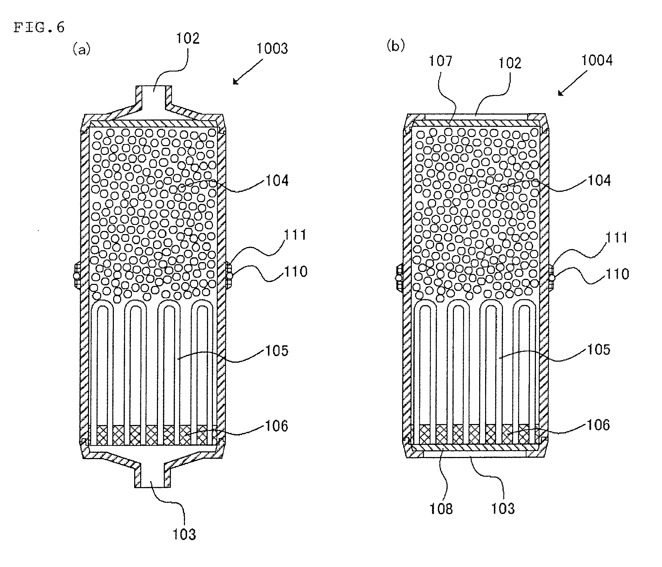

Fig. 6 is a schematic cross-sectional view illustrating a preferred configuration example of the present embodiment.

The water-purifying cartridge 1003 illustrated in Fig. 6 has a configuration in which the O ring 110 consisting of an elastic body is installed at a center part in a vertical direction of the water-purifying cartridge 1001 illustrated in Fig. 1 (Fig. 6(a)). The O ring 110 is fitted into the groove forming section 111. Similarly, the water-purifying cartridge 1004 has a configuration in which the O ring 110 consisting of an elastic body is installed at a center part in a vertical direction of the water-purifying cartridge 1002 illustrated in Fig. 4 (Fig. 6(b)).

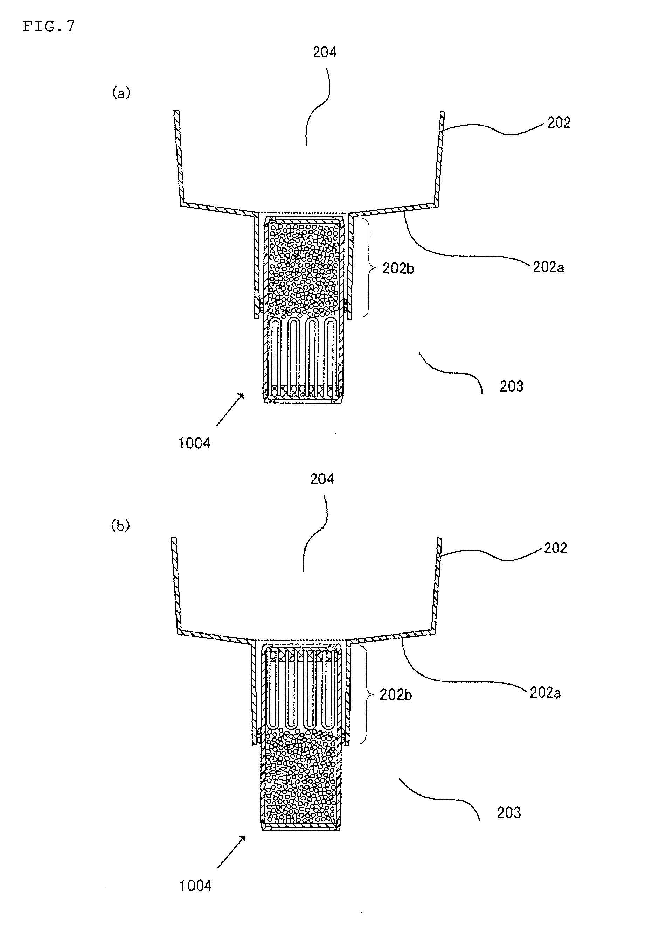

Fig. 7 is a schematic cross-sectional view illustrating the state in which the water-purifying cartridge 1004 is arranged in the accommodating section 202b of a pot-type water purifier. Fig. 7(a) illustrates a state in which the first opening 102 is arranged toward the raw water storage section. Fig. 7(b) illustrates a state in which the second opening 103 is arranged toward the raw water storage section.

The accommodating section 202b of the water purifier is formed into a slope such that the cross-section in horizontal direction decreases from top to bottom. Further, it is preferable that the center of any cross-section in horizontal direction of the accommodating section of the water purifier is located on the center line along the vertical direction of the accommodating section. The O ring 110 installed near the center in the vertical direction of the water-purifying cartridge 1004 is fitted to the side wall of the accommodating section 202b in a liquid tight manner. Due to gravity-fed of the water-purifying cartridge, it is pressed against the O ring and the side wall of the accommodating section so that light tight fitting is achieved.

In Fig. 7, even in a state in which the arrangement is made in any direction in the accommodating section, the opening surface of the first opening 102 and the second opening 103 is present at a height equal to or below the height of the top end of the accommodating section.

### (Embodiment 4)

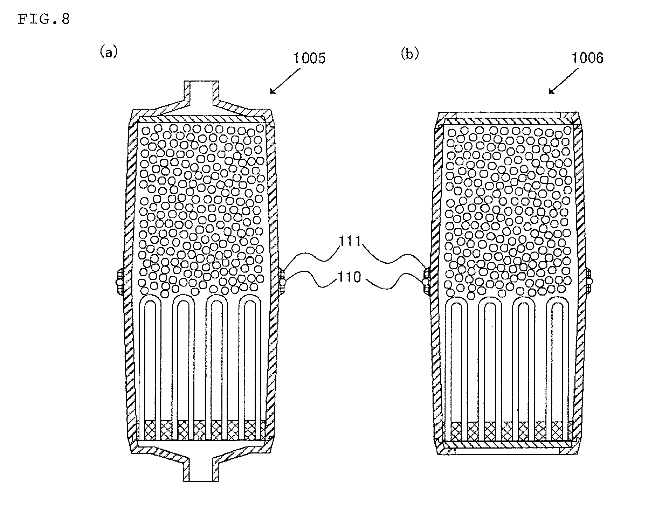

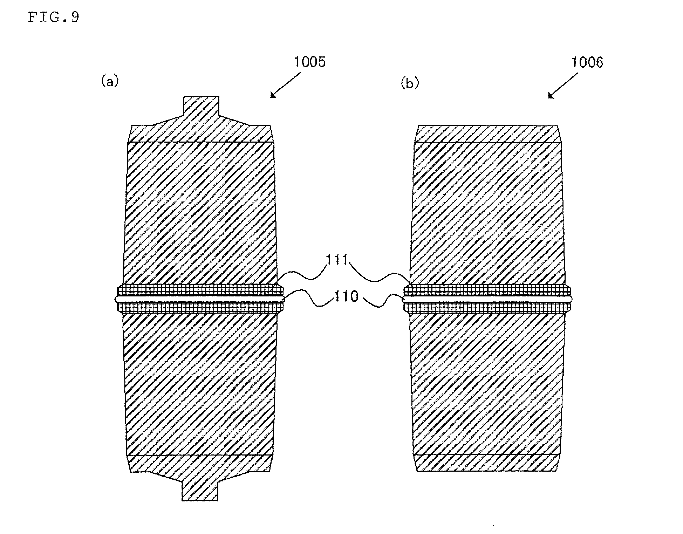

As illustrated in Fig. 8, the water-purifying cartridge may also have a configuration in which the side wall of the container is formed into a slope such that the cross-section in a horizontal direction decreases from the center or so in vertical direction toward both ends. It is also preferable that any cross-sectional center in a horizontal direction of the side wall of the container is present on the center line along the vertical direction of the container. By having such container, it is easy for carrying out insertion in the accommodating section in any direction. Examples of the container shape include an approximately barrel shape. In Fig. 9, an outer shape of the water-purifying cartridge illustrated in Fig. 8 is given.

The water-purifying cartridge illustrated in Fig. 8 has a container in which the side wall is formed into a slope such that the cross-section in a horizontal direction decreases from the center or so toward both ends. Further, as a fitting section, the O ring 110 is installed near the center of the container. By using an approximately barrel shape container such as the water-purifying cartridge 1006 illustrated in Fig. 8(b) and installing the first opening and the second opening on top surface and bottom surface of the container, the area of the opening can be enlarged so that the volume of the filtering material or the hollow fiber membrane can be effectively maintained and a water-purifying cartridge having excellent efficiency for introducing raw water and excellent filtration efficiency can be provided.

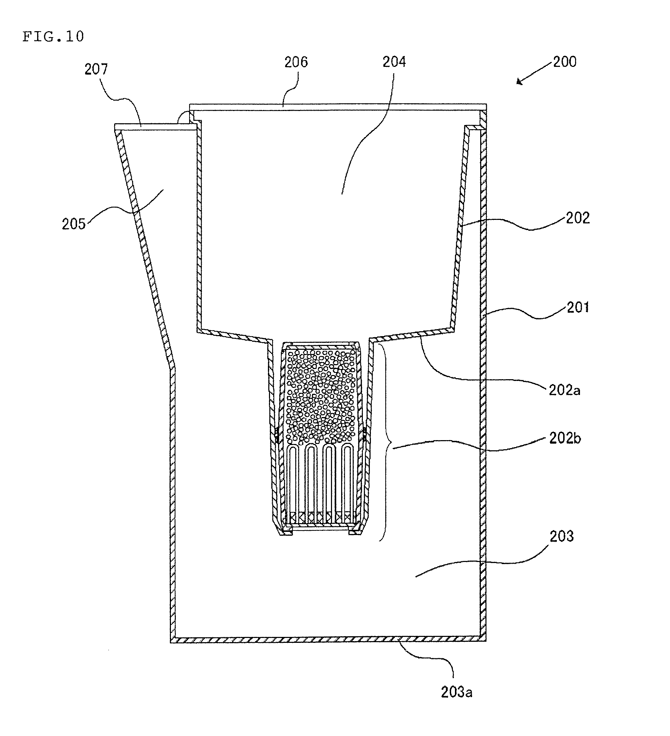

As illustrated in Fig. 10, it is also preferable in the present embodiment that, in a state in which the arrangement is made in any direction in the accommodating section, the opening surface of the first opening 102 and the second opening 103 is present at a height equal to or below the height of the top end of the accommodating section.

### (Embodiment 5)

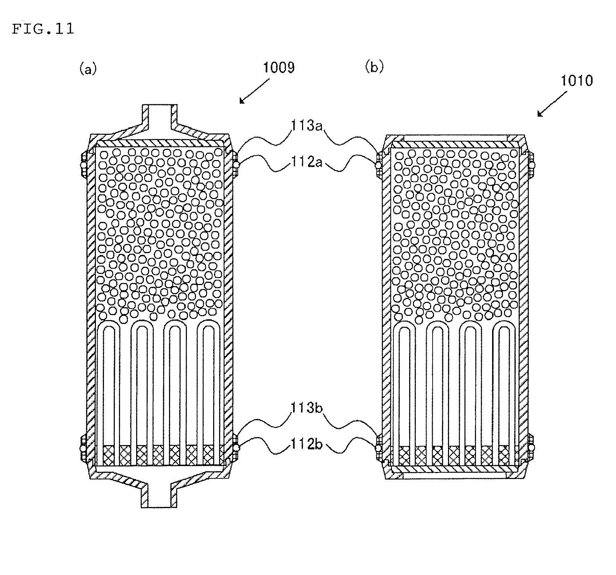

In the embodiment described above, a configuration of having a fitting section near center is illustrated. However, as illustrated in Fig. 11, it is also possible to have a configuration in which a fitting section is installed for each of the both ends of the lateral surface of the container. By installing a fitting section for the accommodating section for each of the top end and bottom end of the lateral surface of the container, the water-purifying cartridge can be installed in any direction in the accommodating section. In Fig. 11, the first O ring 112a is fitted into the first groove forming section 113a, which is installed near the top end of the lateral surface of the container, thus forming the first fitting section. Furthermore, as the second O ring 112b is fitted into the second groove forming section 113b, which is installed near the bottom end of the lateral surface of the container, the second fitting section is formed.

### (Embodiment 6)

In the embodiments described above, explanations are given mostly about a gravity-fed filtration type. However, in the present embodiment, a pressure filtration type is explained.

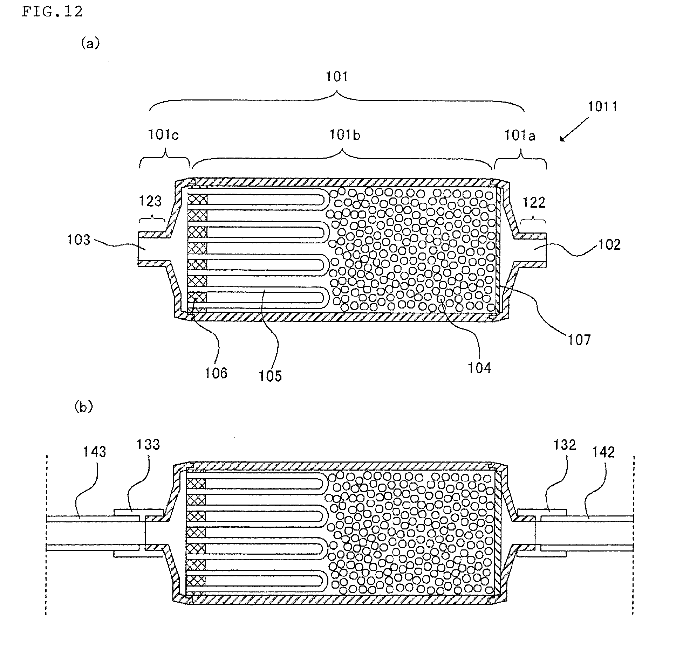

Fig. 12(a) is a schematic cross-sectional view illustrating an example of a pressure filtration type according to the present embodiment. Fig. 12(b) is a schematic cross-sectional view for illustrating the pressure filtration-type water-purifying cartridge illustrated in Fig. 12(a) as connected to the raw water supply pipe 142 and the purified water delivery pipe 143. The raw water supply pipe 142 and the purified water delivery pipe 143 can be understood as a part of the configuration of the water purifier.

In Fig. 12(a), 122 represents a first connecting part and 123 represents a second connecting part. The first opening 102 is exposed to the first connecting part 122 and the second opening 103 is exposed to the second connecting part 123. The first connecting part 122 is installed on the first cover 101a and the second connecting part 123 is installed on the second cover 101.

In Fig. 12(b), the first connecting part 122 is connected to the raw water supply pipe 142 via the first connecting member 132. However, it is also configured such that it can be connected to the purified water delivery pipe 143 via the second connecting member 133. Further, in Fig. 12(b), the second connecting part 123 is connected to the raw water supply pipe 143 via the second connecting member 133. However, it is also configured such that it can be connected to the raw water delivery pipe 142 via the first connecting member 132. In other words, according to the present embodiment, connection can be made in any direction to the raw water supply pipe or to the purified water delivery pipe.

According to connection of the first connecting part 122 to the raw water supply pipe 142 and connection of the second connecting part 123 to the purified water delivery pipe 143, raw water flows into the first opening 102. Then, the raw water flows from the first opening 102 to the filtering material 104, and filtered through the filtering material 104 and the hollow fiber membrane 105. The obtained purified water is delivered from the second opening 103 to the purified water delivery pipe 143. A faucet is installed in front of the purified water delivery pipe 143. Such connection state is effective for a case in which heavy metals contained in raw water are present mostly in ion state.

Meanwhile, according to connection of the second connecting part 123 to the raw water supply pipe 142 and connection of the first connecting part 122 to the purified water delivery pipe 143, raw water flows into the second opening 103. Then, the raw water flows from the second opening 103 to the hollow fiber membrane 105, and filtered through the hollow fiber membrane 105 and the filtering material 104. The obtained purified water is delivered from the first opening 102 to the purified water delivery pipe 143. Such connection state is effective for a case in which heavy metals contained in raw water are present mostly in particle state.

The connecting part or the connecting member is not particularly limited, and a conventional mode can be adopted, for example. By having a configuration in which each of the first connecting part and the second connecting part can be connected to the first connecting member and the second connecting member, respectively, connection can be made in any direction.

The water-purifying cartridge according to the present embodiment can be installed within a sink or the like, but it is not particularly limited thereto.

### EXAMPLES

Hereinafter, the invention will be described in detail with reference to Examples.

### [Example 1]

In Example, a water-purifying cartridge having the structure illustrated in Fig. 1 was prepared and evaluated.

As a heavy metal adsorbent, a H-type weak cation exchange resin (that is, weak acid cation exchange resin, MR type, manufactured by Organo Corporation, trade name: Amberlite (registered trademark) IRC76) was used. A filtering material obtained by mixing the heavy metal adsorbent and active carbon (20/42 mesh, manufactured by Kuraray Chemical Co., Ltd., trade name: GW20/42) at 50/50 (volume ratio) was used.

As a hollow fiber membrane, MF membrane (membrane area: 0.16 m², manufactured by Mitsubishi Rayon Co., Ltd., trade name: EX270) was used.

The produced water-purifying cartridge was set in the accommodating section of a water purifier which has the configuration illustrated in Fig. 2, and water was allowed to pass through according to NSF/ANSI 50 Lead (pH 8.5). With regard to the arrangement direction, there are a case in which the first opening is arranged toward the raw water storage section and a case in which the second opening is arranged toward the raw water storage section, and evaluation was made for both cases.

Pb was measured based on atomic absorption.

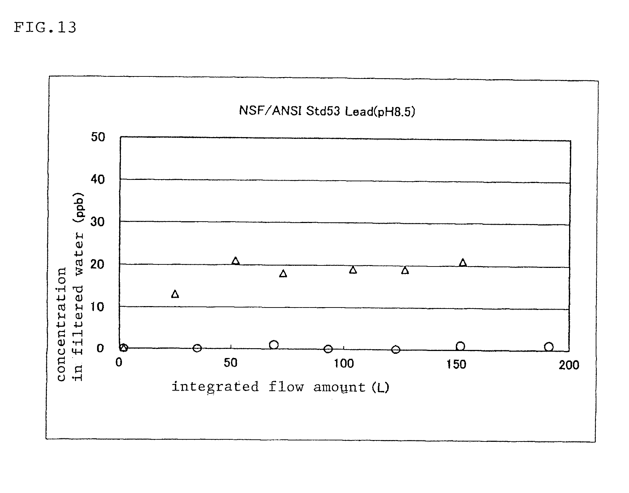

In Fig. 13, the results of the integrated flow amount and Pb concentration are illustrated. In Fig. 13, O represents the results obtained by an evaluation after arranging the hollow fiber membrane side toward the raw water storage section such that water can flow through the hollow fiber membrane and the filtering material in this order. Δ represents the results obtained by an evaluation after arranging the filtering material side toward the raw water storage section such that water can flow through the filtering material and the hollow fiber membrane in this order.

As illustrated in Fig. 13, in case of pH 8.5, it is found that heavy metals can be more efficiently removed when the raw water is first passed through the hollow fiber membrane and then induced to the filtering material. Accordingly, it was confirmed that, by arranging the water-purifying cartridge of the invention in a direction which is selected depending on quality of water, the heavy metals can be effectively removed.

### EXPLANATIONS OF NUMERALS

- 101: Container
- 101a: First cover
- 101b: Case body
- 101c: Second cover
- 102: First opening
- 103: Second opening
- 104: Filtering material
- 105: Hollow fiber membrane
- 106: Potting resin
- 107: Partition wall with water permeability
- 108: Filter
- 110: O ring
- 111: Groove forming section
- 112: O ring
- 113: Groove forming section
- 122: First connecting part
- 123: Second connecting part
- 132: First connecting member
- 133: Second connecting member
- 142: Raw water supply pipe
- 143: Purified water transport pipe
- 200: Water purifier
- 201: Outer container
- 202: Inner container
- 202b: Cartridge accommodating section
- 203: Purified water storage section
- 204: Raw water storage section
- 205: Clearance
- 206: Top cover
- 207: Pouring cover

## Claims

1. A water-purifying cartridge, comprising:
a container having a first opening and a second opening, wherein any one of the first opening and the second opening is used as an inlet for introducing raw water and the other is used as an outlet for purified water,
a filtering material including an adsorbent capable of adsorbing heavy materials, and
a hollow fiber membrane,
wherein the filtering material and the hollow fiber membrane are arranged within the container in this order, from one of the first opening and the second opening toward the other.

2. The water-purifying cartridge according to claim 1, wherein the adsorbent is a H-type cation exchange resin or a chelate resin.

3. The water-purifying cartridge according to claim 1 or 2, wherein the container has a case body for accommodating the filtering material and the hollow fiber membrane within it, a first cover having the first opening at any one end of the case body, and a second cover having the second opening at the other end of the case body.

4. The water-purifying cartridge according to any one of claims 1 to 3, being a gravity-fed filtration type and, wherein in a cartridge accommodating section installed between a raw water storage section and a purified water storage section of a water purifier, any one of the first opening and the second opening is arranged on the raw water storage section and the other of them is arranged on the purified water storage section so as to allow communication.

5. The water-purifying cartridge according to claim 4, wherein a fitting section for the cartridge accommodating section is installed near the center of the vertical direction
of the container.

6. The water-purifying cartridge according to claim 5, wherein a shape of the container is approximately cylindrical.

7. The water-purifying cartridge according to claim 5, wherein a side wall of the container is formed into a slope such that a cross-section in a horizontal direction decreases from the center or so in vertical direction toward both ends.

8. The water-purifying cartridge according to claim 7, wherein a shape of the container is an approximately barrel shape.

9. The water-purifying cartridge according to any one of claims 1 to 3, being a pressure filtration type, wherein any one of the first opening and the second opening is be connected to a raw water supply pipe for supplying raw water and the other of them is connected to a purified water delivery pipe for delivering purified water.

10. The water-purifying cartridge according to claim 9, having a first connecting part for exposing the first opening and a second connecting part for exposing the second opening, and has a configuration that each of the first connecting part and the second connecting part is connected to any one of a raw water supply pipe and a purified water delivery pipe.

11. A gravity-fed filtration-type water purifier which is provided with the water purification described in any one of Claims 4 to 8 and has a cartridge accommodating section installed between a raw water storage section and a purified water storage section.

12. The gravity-fed filtration-type water purifier according to claim 11, wherein the water-purifying cartridge has a fitting section including an O ring comprised of an elastic body and liquid tight accommodation is achieved as the O ring contacts a side wall of the cartridge accommodating section.

13. The gravity-fed filtration-type water purifier according to claim 11 or 12, wherein an opening surface of the first opening is at a height equal to or below the height of the top end of the accommodating section if the first opening is installed toward the raw water storage section on the cartridge accommodating section, and an opening surface of the second opening is at a height equal to or below the height of the top end of the accommodating section if the second opening is installed toward the raw water storage section on the cartridge accommodating section.

14. The gravity-fed filtration-type water purifier according to claim 13, wherein a side wall of the cartridge accommodating section is formed into a slope such that a cross-section of the cartridge accommodating section in a horizontal direction increases from the bottom side to the top side.

15. A pressure filtration-type water purifier being provided with the water-purifying cartridge described in claim 9 or 10 and has a raw water supply pipe and a purified water delivery pipe.
